# EUROPÄISCHE PATENTSCHRIFT

(11) **EP 0 403 770 B1**
(45) Veröffentlichungstag und Bekanntmachung des Hinweises auf die Patenterteilung: **09.06.1993**
(21) Anmeldenummer: 90108231.3
(22) Anmeldetag: 30.04.1990
(51) Int. Cl.: B62D 61/12

(54) **Einrichtung zur Gewinnung eines Achslastsignals an einem Lift- Achsaggregat**
Device for obtaining a load signal from a mechanically sprung and driven axle of running gear comprising a lift-axle
Dispositif d'obtention d'un signal de charge d'un essieu d'un arbre de commande à suspension mécanique, ayant un essieu relevable

(30) Priorität: 21.06.1989 DE 3920289
(43) Veröffentlichungstag der Anmeldung: 27.12.1990
(73) Patentinhaber: WABCO Vermögensverwaltungs-GmbH, D-30432 Hannover (DE)
(72) Erfinder: Eckert, Horst, D-3056 Rehburg-Loccum 3 (DE)
(74) Vertreter: Schrödter, Manfred, Dipl.-Ing.

(56) Entgegenhaltungen:
- DE-A- 2 652 811
- DE-A- 3 824 366

## Beschreibung

Die Erfindung betrifft eine Einrichtung zur Gewinnung eines Achslastsignals der mechanisch gefederten Antriebsachse eines aus der Antriebsachse und einer durch Druckbeaufschlagung wenigstens eines Druckmittelelements mit wenigstens einem Abschaltdruck abschaltbaren Liftachse bestehenden Lift-Achsaggregats gemäß dem Oberbegriff des Patentanspruchs 1.

In einem Lift-Achsaggregat der in dem Oberbegriff erwähnten Art wird die Liftachse durch Druckbeaufschlagung des Druckmittelelements mit einem Abschaltdruck oder einem höheren Druck von der Fahrbahn abgehoben und dadurch abgeschaltet. In diesem Zustand wirkt die Antriebsachse als Einzelachse und trägt die volle Achslast. Durch Druckentlastung des Druckmittelelements - seitens des Fahrers oder selbsttätigkönnen die Liftachse auf die Fahrbahn abgesenkt und damit zugeschaltet und das Lift-Achsaggregat unter Erhöhung seiner Tragkraft zu einer Doppelachse werden.

Die Höhe des Abschaltdrucks hängt unter anderem von der momentanen Achslast des Lift-Achsaggregates und der Auslegung des Druckmittelelements ab. Bei Beaufschlagung des Druckmittelelements mit geringerem Druck als dem Abschaltdruck übernimmt die Liftachse je nach Höhe des Drucks einen Anteil der momentanen Achslast. Herrscht in dem Druckmittelelement nur Umgebungsdruck, ist es also völlig druckentlastet, so bestimmt sich der von der Liftachse übernommene Achslastanteil nur nach Hebelverhältnissen im Lift-Achsaggregat. In diesem Zustand ist die Liftachse voll zugeschaltet.

Die Achslast bzw. der Achslastanteil der Antriebsachse bei abgeschalteter bzw. bei zugeschalteter Liftachse können durch den Weg eines Punktes der Antriebsachse relativ zum Fahrzeugoberbau und durch den Druck des Druckmittelelements beschrieben werden. Bei voll zugeschalteter Liftachse, d.h. bei Umgebungsdruck im Druckmittelelement, ist der Achslastanteil der Antriebsachse proportional der Achslast des kompletten Lift-Achsaggregats und damit auch ein Maß für diese. Beim Zu- und Abschalten der Liftachse, d.h. bei deren Absenken und Anheben, macht der betrachtete Punkt der Antriebsachse einen Wegsprung, der sich zur Achslastbestimmung nicht auswerten läßt.

Das Lift-Achsaggregat kann in zwei Betriebsarten betrieben werden. In der einen Betriebsart, die nachstehend mit "variabler Achslastbeteiligung der Liftachse" bezeichnet werde, wird das Lift-Achsaggregat auch mit geringerem Druck in dem Druckmittelelement als dem Abschaltdruck betrieben, also mit vom Druck des Druckmittelelements abhängigem Achslastanteil der Liftachse zwischen null und dem durch die Hebelverhältnisse vorgegebenen. In der anderen Betriebsart, die nachstehend mit "feste Achslastbeteiligung der Liftachse" bezeichnet werde, wird das Lift-Achsaggregat nur mit abgeschalteter oder voll zugeschalteter Liftachse, d.h. entweder mit wenigstens dem Abschaltdruck oder mit Umgebungsdruck in dem Druckmittelelement betrieben. In dieser Betriebsart wirkt das Lift-Achsaggregat entweder als Einzelachse mit einem Achslastanteil der Liftachse von null oder als Doppelachse mit einem von den Hebelverhältnissen vorgegebenen Achslastanteil der Liftachse. Einen dazwischen liegenden Achslastanteil der Liftachse kennt diese Betriebsart nicht.

Eine Einrichtung der eingangs genannten Art ist aus der DE-A-26 52 811 bekannt. Diese weist einen Signalkörper auf, der abhängig von dem Weg eines Punktes der Antriebsachse relativ zu einem Punkt von deren Feder gedreht wird. Der Signalkörper betätigt elektrische Schalter, wenn der genannte Weg vorbestimmte Werte annimmt. Das mit dieser Einrichtung gewonnene Achslastsignal liefert also eine Aussage über das Erreichen vorbestimmter Achslastwerte.

Eine andere Einrichtung der eingangs gennanten Art ist in der nicht vorveröffentlichten deutschen Patentanmeldung P 38 40 838.4 beschrieben. In dieser ist auf der Oberfläche des Signalkörpers ein dreidimensionales Kennfeld angeordnet, welches für jede Konstellation von Drehstellung und Axialstellung des Signalkörpers einen vorbestimmten Abstand von einem Punkt des Fahrzeugoberbaus aufweist, welcher Abstand das zu gewinnende Achslastsignal bildet. Zur lastabhängigen Einstellung des Signalkörpers und damit des Kennfeldes wird der Signalkörpers in einer Ausbildung abhängig von der Einfederung der Antriebsachse gedreht und abhängig vom Druck des Druckmittelelements axial verschoben. In einer anderen Ausbildung ist die Zuordnung der Bewegungen des Signalkörpers zu dem Druck und der Einfederung vertauscht.

Diese bekannte Einrichtung ist für den Einsatz des Lift-Achsaggregates in beiden vorstehend erwähnten Betriebsarten geeignet. Sie ist jedoch für die Betreibsart "feste Achslastbeteiligung der Liftachse" in ihrem Leistungsvermögen überdimensioniert, da sie in dieser Betriebsart druckabhängig nur in ihren Endstellungen eingesetzt wird.

Der Erfindung liegt deshalb die Aufgabe zugrunde, eine Einrichtung der zuletzt gennanten Art für den Betrieb des Lift-Achsaggregats in der Betriebsart "feste Achslastbeteiligung der Liftachse" zu vereinfachen.

Diese Aufgabe wird durch die in dem Patentanspruch 1 angegebene Erfindung gelöst. Vorteilhafte Ausgestaltungen und Weiterbildungen sind in den Unteransprüchen angegeben.

Die erfindungsgemäße Einrichtung bildet eine Grundausführung, die sich unter Vermeidung des aufwendigen dreidimensionalen Kennfelds mit einfachen Mitteln für den Betrieb des Lift-Achsaggregates in der Betriebsart "variable Achslastbeteiligung der Liftachse" fortbilden läßt. Fortgebildet läßt sich die Erfindung in Verbindung mit allen geeigneten Druckmitteln ausführen.

Die Erfindung wird nachstehend unter Angabe weiterer Vorteile anhand von in Zeichnungen dargestellten Ausführungsbeispielen erläutert. Dabei werden für funktionsgleiche Bauelemente durchgehend gleiche Bezugszeichen verwendet.

Es zeigen:
- **Fig.1**: eine generelle Anordnung eines Lift-Achsaggregats mit einer Einrichtung zur Gewinnung eines Achslastsignals von dessen Antriebsachse,
- **Fig.2**: Einzelheiten der Einrichtung zur Gewinnung des Achslastsignals,
- **Fig.3**: eine Fortbildung des Gegenstands der Fig.2,
- **Fig.4**,**5**,**6** und **7**: andere Fortbildungen des Gegenstands der Fig. 2.

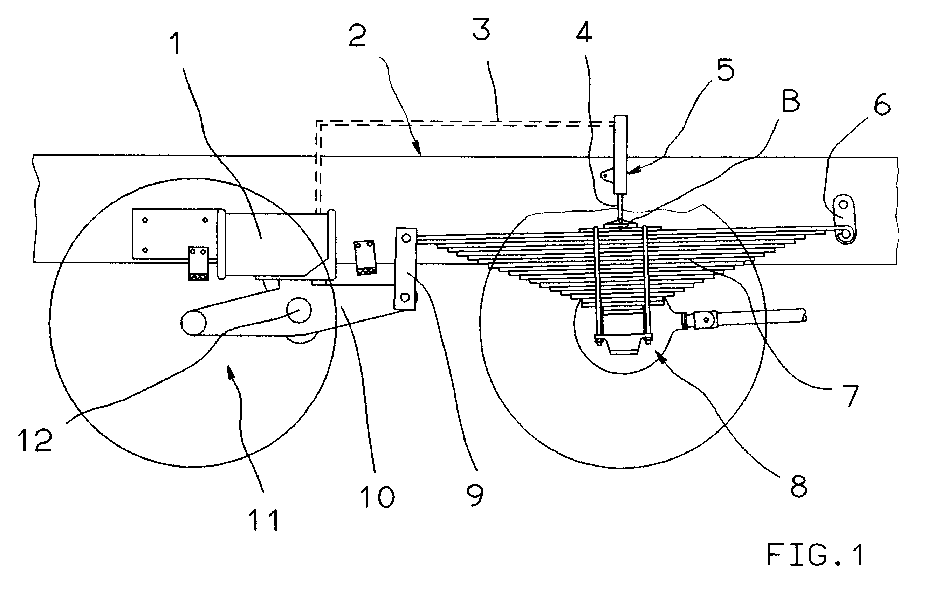

Fig.1 zeigt ausschnittsweise einen generell mit (2) bezeichneten Fahrzeugoberbau, der in bekannter Weise aus einem Fahrzeugrahmen sowie Aufbau- und Anbauteilen besteht. Über wenigstens ein mechanisches Federelement, Aufhänge- und Verbindungsmittel (6, 9, 12), wenigstens einen Doppelhebel (10) und wenigstens ein Druckmittelelement ist an dem Fahrzeugoberbau (2) ein Lift-Achsaggregat aufgehängt. Das mechanische Federelement ist als Blattfeder (7) ausgebildet und wird als solche nachstehend in Bezug genommen. Entsprechendes gilt für das als Liftbalg (1) ausgebildete Druckmittelelement. Ein Liftbalg ist üblich, wenn das verwendete Druckmittel gasförmig, insbesondere Luft, ist. Es ist aber ebenso üblich, als Druckmittelelement Kolbenzylinder einzusetzen, dies insbesondere bei Verwendung eines hydraulischen Druckmittels. Auch hinsichtlich des mechanischen Federelements sind andere Bauarten üblich.

Das Lift-Achsaggregat besteht aus einer durch die Blattfeder (7) mechanisch gefederten Antriebsachse (8) und einer Liftachse (11). Die Liftachse (11) ist als Nachlaufliftachse dargestellt, kann aber in bekannter Weise auch vorauslaufend angeordnet sein.

Die Wirkungsweise eines solchen Lift-Achsaggregats ist in der Beschreibungseinleitung ausführlich erläutert. Der Vollständigkeit halber ist nachzutragen, daß die dort erwähnten Hebelverhältnisse sich aus den Hebellängen des Doppelhebels (10) und der Länge der Blattfeder (7) ergeben.

Fig.1 zeigt noch die generelle Anordnung einer Einrichtung (5) zur Gewinnung eines Achslastsignals der Antriebsachse (8). Auf diese wird über ein Gestänge (4) der Weg eines Punktes (B) der Antriebsachse (8) etwa in Richtung der Achslast, also etwa senkrecht zur Fahrbahn, und relativ zum Fahrzeugoberbau (2), das ist die Einfederung der Antriebsachse (8), übertragen. Der Einfachheit und Übersichtlichkeit halber ist der Punkt (B) an einem Bereich der Blattfeder (7) dargestellt, der fest mit der Antriebsachse (8) verbunden ist. Der Punkt (B) kann aber auch an anderen geeigneten Bereichen der Antriebsachse (8) oder der Blattfeder (7) vorgesehen sein.

Gestrichelt ist noch eine Druckmittelleitung (3) zwischen dem Liftbalg (1) und der Einrichtung (5) dargestellt, auf die an gegebener Stelle näher eingegangen wird.

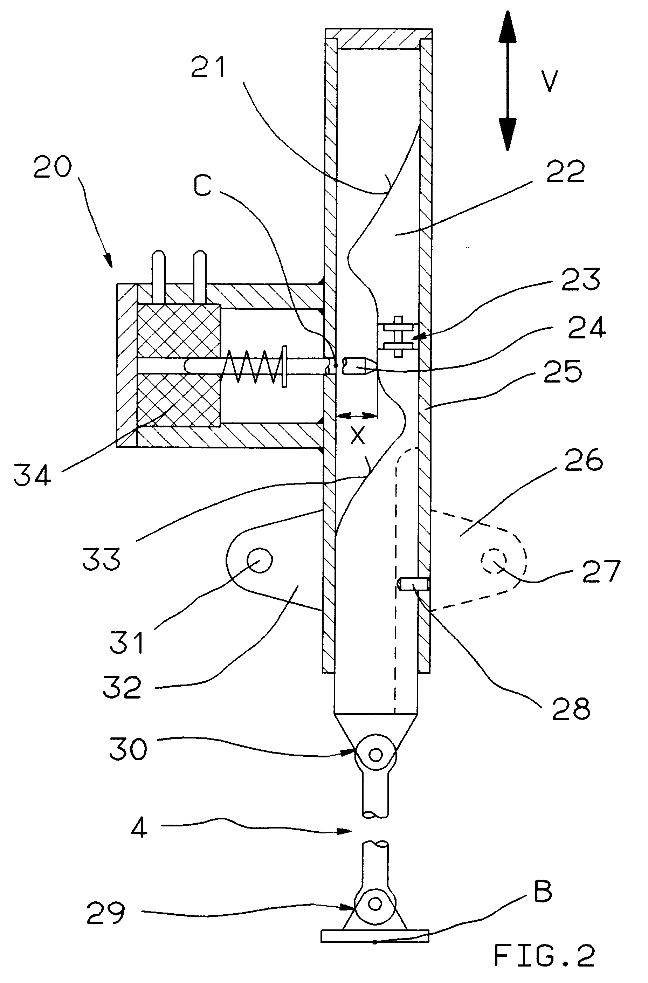

Fig.2 zeigt Einzelheiten der Einrichtung (5).

In einem Gehäuse (25) ist ein Signalkörper (22) verschiebbar gelagert. Das Gehäuse (25) ist am Fahrzeugrahmen befestigt, so daß es selbst Bestandteil des Fahrzeugoberbaus (2) ist. In dem Gehäuse (25) und damit am Fahrzeugoberbau (2) ist ein Punkt (C) definiert, der innerhalb der durch die weiter unten beschriebenen Funktionen gesetzten Grenzen beliebig angeordnet sein kann.

Der Signalkörper (22) trägt eine dem Punkt (C) zugewandte Kontur (21, 33), die für jede Verschiebestellung einen vorbestimmten Abstand (x) von dem Punkt (C) im wesentlichen quer zur Verschiebeachse (Doppelpfeil V) des Signalkörpers (22) aufweist. Die Kontur (21, 33) kann am Signalkörper (22) flächig oder linienförmig ausgebildet sein.

Der Signalkörper (22) ist über das im wesentlichen koaxial zu seiner Verschieberichtung (Doppelpfeil V) verlaufende Gestänge (4) mit dem Punkt (B) der Antriebsachse (7) verbunden. Die erwähnte Verschieberichtung (Doppelpfeil V) verläuft etwa in Richtung der Achslast.

Die Einrichtung (5) funktioniert wie folgt.

Jeder Weg des Punktes (B) der in Rede stehenden Art wird über das Gestänge (4) auf den Signalkörper (22) übertragen und verschiebt diesen entsprechend gegenüber dem Punkt (C). Dieser Weg des Punktes (B) bzw. die entsprechende Verschiebung des Signalkörpers (22) sind in der Betriebsart "feste Achslastbeteiligung der Liftachse" bei abgeschalteter Liftachse ein Maß für die Achslast der Antriebsachse (8) und bei zugeschalteter Liftachse (11) ein Maß sowohl für den Achslastanteil der Antriebsachse (8) als auch für die Achslast des kompletten Lift-Achsaggregats. Die Kontur (21, 33) des Signalkörpers (22) ist nun so ausgebildet, daß der jeweilige Abstand (x) ein Maß für die soeben erwähnte Verschiebung ist und damit ein Achslastsignal für die soeben erwähnten Achslasten bzw. den Achslastanteil bildet.

Die Kontur (21, 33) besteht aus zwei Abschnitten (21) bzw. (33). Wegen des Wegsprungs des Punktes (B) beim Abschalten bzw. Zuschalten der Liftachse (11) sind der eine Abschnitt (21) bei abgeschalteter Liftachse (11) und der andere Abschnitt (33) bei zugeschalteter Liftachse (11) wirksam. Der Verlauf der Kontur (21, 33) wird im Abschnitt (21) durch die Federcharakteristik der Blattfeder (7) bestimmt und im Abschnitt (33) durch die Federcharakteristik der Kombination von Blattfeder (7) und Liftbalg (1) bestimmt. Zwischen den Abschnitten (21) und (33) weist die Kontur (21, 33) einen nicht näher bezeichneten neutralen Bereich auf, der dem Wegsprung entspricht.

Es wird noch auf einige konstruktive Einzelheiten der dargestellten Einrichtung eingegangen.

Zur Entlastung des Signalkörpers (22) und des Gestänges (4) von Querkräften sind dessen Verbindungen zum Signalkörper (22) bzw. zur Antriebsachse (8) als schematisch angedeutete Gelenke (30) bzw. (29) ausgebildet. Dieses Ziel kann auch mit anderen konstruktiven und fertigungstechnischen Maßnahmen erreicht werden.

Das Gehäuse (25) ist am Fahrzeugrahmen schwenkbar befestigt. Diesem Zweck dient ein mit durchgezogener Linie gezeichneter Flansch (32) und eine darin angeordnete Bohrung (31). Das Gehäuse (25) kann aber auch starr am Fahrzeugrahmen befestigt werden. Für diesen Fall ist gestrichelt ein zweiter Flansch (26) mit einer Bohrung (27) angedeutet.

Zur Verdrehsicherung des Signalkörpers (22) gegenüber dem Gehäuse (25) und damit gegenüber dem Fahrzeugoberbau (2) ist am Gehäuse (25) ein Führungsstift (28) angeordnet, der in einer entsprechend ausgebildeten, durch eine gestrichelte Linie angedeuteten Nut des Signalkörpers (22) läuft. Auch zu diesem Zweck sind andere Mittel einsetzbar.

Es ist auch möglich, in nicht dargestellter Weise den in Rede stehenden Weg des Punktes (B) über andere Arten Gestänge, z.B. Winkelgestänge, auf den Signalkörper (22) zu übertragen.

Zum Ausgleich von Einbautoleranzen und Toleranzen der Federcharakteristik der Blattfeder (7) kann das Gestänge (4) oder ein nicht dargestelltes anderes Gestänge mit einstellbarer Länge versehen sein. Zum gleichen Zweck kann der Signalkörper (22) in nicht näher dargestellter Weise aus zwei Teilen mit je einem Abschnitt (21) bzw. (33) der Kontur (21, 33), deren Lage zueinander durch eine schematisch angedeutete Einstellvorrichtung (23) eingestellt werden kann.

Das von der Einrichtung (5) erzeugte Achslastsignal kann auf jede geeignete Art ausgewertet werden. Im Ausführungsbeispiel ist zu diesem Zweck ein unterbrochen dargestellter Stößel (24) vorgesehen, der den Abstand (x) erfaßt. Zu diesem Zweck ist der Stößel (24) in weiter unten näher beschriebener Weise axial am Fahrzeugoberbau verschiebbar geführt und gegen die Kontur (21, 33) vorgespannt. Bei einer Verschiebung des Signalkörpers (22) folgt der Stößel (24) der Kontur (21, 33) und wird dabei in eine den jeweiligen Abstand (x) charakterisierenden Stellung verschoben.

Die Verschiebung des Stößels (24) kann auf jede geeignete Art ausgewertet werden. Im vorliegenden Ausführungsbeispiel ist der Stößel (24) zu diesem Zweck als Fühler eines generell mit (20) bezeichneten elektrischen Wegsensors ausgebildet. Der Wegsensor (20) weist in bekannter Weise einen schematisch angedeuteten Stator (34) auf, in den der Stößel (24) nach Maßgabe der Kontur (21, 33) unterschiedlich tief eintaucht, woraufhin der Wegsensor (20) ein dem Abstand (x) und damit dem Achslastsignal entsprechendes elektrisches Signal abgibt.

Der Stator (34) ist in nicht näher dargestellter Weise über geeignete Gehäuseteile mit dem Gehäuse (25) verbunden und bildet daher wie dieses ein Bestandteil des Fahrzeugoberbaus (2). Die axial verschiebbare Führung des Stößels (24) ist in der Weise realisiert, daß der Stößel in dem Stator (34) bzw. in den erwähnten zugeordneten Gehäuseteilen axial verschiebbar geführt ist. Die erwähnte Vorspannung des Stößels (24) gegen die Kontur (21, 33) geschieht mittels einer nicht näher bezeichneten, zwischen dem Stator (34) bzw. den Gehäuseteilen und dem Stößel (24) gefangenen Feder. Vorspannung und Führung sind aber auch auf jede andere geeignete Art ausführbar.

Das elektrische Signal des Wegsensors (20) kann beispielsweise für eine elektrische lastabhängige Bremskraftsteuerung eingesetzt werden. Die Verschiebung des Stößels (24) nach Maßgabe der Kontur (21, 33) kann aber auch auf jede andere zweckdienliche Weise ausgewertet werden. Beispielsweise kann die Verschiebung des Stößels (24) zur Steuerung eines lastabhängigen Bremsdruckreglers in üblicher stößelgesteuerter Bauart herangezogen werden.

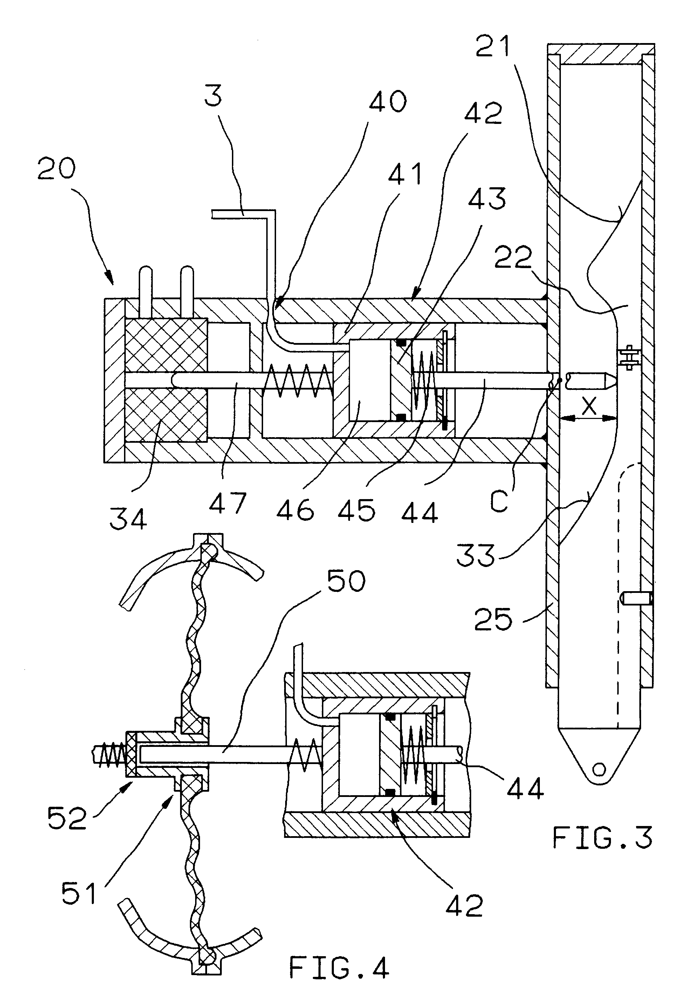

Das Ausführungsbeispiel nach Fig.3 weist gegenüber dem Ausführungsbeispiel nach Fig.2 folgende Fortbildungen auf.

Der hier generell mit (44, 42, 47) bezeichnete Stößel besteht aus Endstücken (44) und (47) und einer dazwischen angeordneten Zylindereinheit (42), deren Länge sich abhängig von der Höhe des ihr zugeführten Drucks einstellt. Die Zylindereinheit (42) wirkt mit den Endstücken (44) und (47) derart zusammen, daß ihre Länge die Stößellänge und damit bei gegebenem Abstand (x) dessen Eintauchtiefe in den Stator (34) und damit den Wert des elektrischen Signals des Wegsensors (20) bestimmt.

Die Zylindereinheit (42) ist über die in Fig. 1 gestrichelt dargestellte Druckmittelleitung (3) an den Liftbalg (1) angeschlossen und mit dessen Druck beaufschlagt. Bei diesem Ausführungsbeispiel wird folglich das beim vorigen Ausführungsbeispiel nur von dem Abstand (x) abhängige Signal des Wegsensors (20) nach Maßgabe des Drucks des Liftbalgs (1) korrigiert bzw. überlagert. Das Ausführungsbeispiel nach Fig.3 ist deshalb auch für die Betriebsart "variable Achslastbeteiligung der Liftachse" geeignet, die laut Beschreibungseinleitung sinngemäß dadurch gekennzeichnet ist, daß der Druck des Liftbalgs (1) auch jeden Wert zwischen Umgebungsdruck und Abschaltdruck annehmen kann.

Aufgrund der Druckabhängigkeit der Stößellänge gibt dieses Ausführungsbeispiel für jede Konstellation von Abstand (x), d.h. Weg des Punktes (B) der in Rede stehenden Art, und Druck des Liftbalgs (1) zwischen Umgebungsdruck und Abschaltdruck ein vorbestimmtes elektrisches Signal ab. Dieses Ausführungsbeispiel ist deshalb in vorteilhafter Weise im Zusammenhang mit speziellen Steuerungs- und/oder Regelungsaufgaben eines Lift-Achsaggregates einsetzbar. Beispielsweise ist insoweit an jeweils elektronische lastabhängige Bremskraftregelung, Traktionssteuerung, Anfahrhilfe, Antriebsachs-Überlastungsschutz usw. zu denken.

Dabei bedeuten "Antriebsachs-Überlastungsschutz", daß mittels einer geeigneten Steuereinrichtung die Liftachse (11) automatisch zugeschaltet wird, wenn die Antriebsachse (8) bis zum zulässigen Wert ausgelastet ist. Bei der "Traktionssteuerung" wird über eine geeignete Steuereinrichtung der Druck im Liftbalg (1) derart gesteuert, daß die einmal erreichte zulässige Achslast der Antriebsachse (8) eingeregelt wird. Dadurch wird sichergestellt, daß von der Antriebsachse (8) stets die größtmögliche Vortriebskraft auf die Fahrbahn übertragen werden kann. Bei der "Anfahrhilfe" wird durch eine geeignete Steuereinrichtung der Druck im Liftbalg (1) kurzzeitig so gesteuert, daß die Antriebsachse (8) ebenso kurzzeitig überlastet wird. Dadurch wird die von der Antriebsachse (8) auf die Fahrbahn übertragbare Vortriebskraft kurzzeitig erhöht, was insbesondere beim Anfahren, zumal auf einer Fahrbahn mit geringem Reibwert, von Vorteil ist.

Konstruktiv ist die erwähnte Druckabhängigkeit der Stößellänge (22, 24, 47) wie folgt gelöst.

Die Zylindereinheit (42) besteht aus einem Zylinder (41) und einem Kolben (43), zwischen denen eine mit der Druckmittelleitung (3) verbundene Kammer (46) eingeschlossen ist. Entgegen dem Druck in der Kammer (46) ist der Kolben (43) durch eine sich einerseits an dem Kolben (43) und andererseits an dem Zylinder (41) abstützende Feder (45) vorgespannt. Der Zylinder (41) ist mit dem in den Stator (34) eintauchenden Endstück (47) des Stößels (44, 42, 47) verbunden, der Kolben (43) ist mit dessen die Kontur (21, 33) des Signalkörpers (22) abtastenden Endstück (44) verbunden.

Herrscht in dem Liftbalg (1) und damit in der Kammer (46) Umgebungsdruck, so verschiebt die Feder (45) den Kolben (43) in Richtung geringsten Volumens der Kammer (46) und stellt damit die geringste Stößellänge ein. Mit zunehmendem Druck in dem Liftbalg (1) und damit in der Kammer (46) federt die Feder (45) zunehmend ein derart, daß jedem Druckwert eine Verschiebung des Kolbens (43) in Richtung größten Volumens der Kammer (46) und damit eine Stößellänge zugeordnet ist. Dabei ist die Feder (45) so ausgebildet, daß der Kolben (43) beim Abschaltdruck in dem Liftbalg (1) und damit in der Kammer (46) gerade die Stellung größten Volumens der Kammer (46) annimmt und dadurch die größte Stößellänge einstellt. In nicht dargestellter Weise kann die Feder (45) auch mit einer Einstellvorrichtung versehen sein. Ein Überschreiten der größten Stößellänge für den Fall eines Anstiegs des Drucks im Liftbalg (1) und damit in der Kammer (46) über den Abschaltdruck hinaus wird in nicht näher dargestellter Weise durch Anschlagen des Kolbens (43) an einem Anschlag am Zylinder (41) oder durch das Zublockgehen der Feder (45) verhindert.

In Fortbildung des bisher beschriebenen Umfangs des Ausführungsbeispiels weist dieses in der Druckmittelleitung (3) noch eine Drossel (40) auf. Diese verhindert, daß jede fahrbahnbedingte Druckspitze im Liftbalg (1) in die Kammer (46) und damit auf die Stößellänge sowie auf das Signal des Wegsensors (20) durchschlägt.

In nicht dargestellter Weise kann die soeben beschriebene Zuordnung der Teile der Zylindereinheit (42) zu den Endstücken (44) und (47) auch umgekehrt werden. Entsprechende Ausbildung des Wegsensors (20) vorausgesetzt, kann die Zylindereinheit auch derart ausgebildet sein, daß sie eine druckabhängige Verkürzung der Stößellänge bewirkt.

Die Zylindereinheit kann auch auf jede andere zweckdienliche Weise ausgebildet sein.

Das Ausführungsbeispiel nach Fig.4 entspricht dem vorigen Ausführungsbeispiel mit der Ausnahme, daß das dort in den Staor (34) des Wegsensors (20) eindringende Endstück (47) durch ein Endstück (50) ersetzt ist, welches zur Steuerung eines stößelgesteuerten lastabhängigen Bremskraftreglers (ALB) dient. Der in üblicher Weise aufgebaute ALB wird durch sein von dem Endstück (50) gesteuertes Regelventil (52) und seine hier aus Kolben und Membran bestehende Regelkolbeneinheit (51) symbolisiert. In diesem Fall wird also die von dem Abstand (x) und dem Druck des Liftbalgs (1) bestimmte resultierende Lage des Endstücks (50) als Achslastsignal ausgewertet.

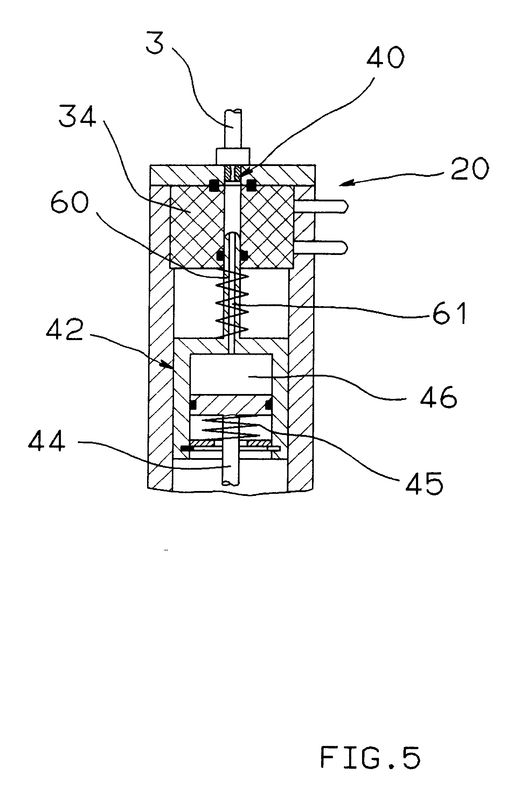

Fig.5 zeigt in einem Ausschnitt eine Fortbildung des Ausführungsbeispiels nach Fig.3, welche sich von jenem in den nachstehend erläuterten Einzelheiten unterscheiden. Das in den Stator (34) eintauchende Endstück (60) des hier mit (44, 42, 60) bezeichneten Stößels ist in dem Stator (34) abgedichtet geführt. Die Druckmittelleitung (3) mündet in den nicht bezeichneten Innenraum des Stators (34). Zur Verbindung dieses Innenraums mit der Kammer (46) ist in dem Endstück (60) ein Verbindungskanal (61) vorgesehen.

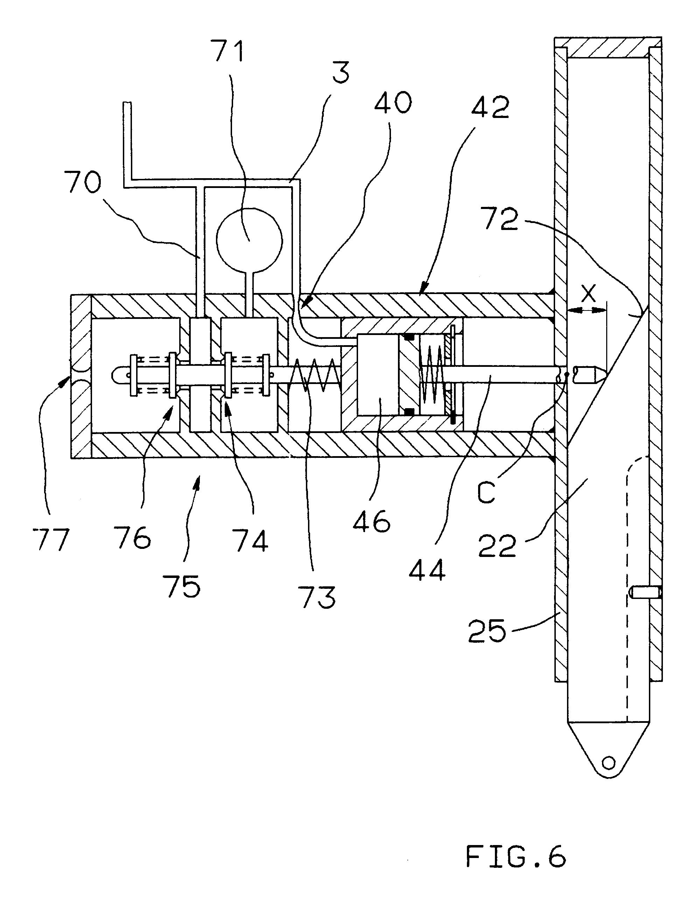

Fig.6 zeigt ein Ausführungsbeispiel, welches wie das Ausführungsbeispiel nach Fig.4 die resultierende Lage eines Endstücks, hier (73), als Achslastsignal auswertet und dieses in ein Drucksignal umsetzt, welches direkt zur Traktionssteuerung verwendet wird.

Dieses Ausführungsbeispiel weist anstelle des elektrischen Wegsensors (20) der Figuren 3 und 5 ein insgesamt mit (75) bezeichnetes Niveauregelventil auf, an dessen Druckausgang die Druckmittelleitung (3) über eine Verbindungsleitung (70) angeschlossen ist. Das bei den Ausführungsbeispielen nach den Figuren 3 und 5 in den Stator (34) eintauchende Endstück (47) bzw. (60) des hier mit (44, 42, 73) bezeichneten Stößels ist durch ein Endstück (73) ersetzt, welches das Einlaßventil (74) und das Auslaßventil (76) des Niveauregelventils (75) steuert. Je nach Bewegung des Endstücks (73) wird in an sich bekannter Weise der Liftbalg (1) über das Einlaßventil (74) mit einem Druckmittelvorrat (71) oder über das Auslaßventil (76) mit einem Druckentlastungsanschluß (77) verbunden. In an sich bekannter Weise wird dadurch der in Rede stehende Weg des Punktes (B) und damit die Achslast der Antriebsachse (8) eingeregelt. Auf diese Weise ist eine einfache Einrichtung zur Traktionssteuerung geschaffen.

Die in diesem Fall mit (72) bezeichnete Kontur des Signalkörpers (22) braucht nicht die Federcharakteristik der Blattfeder (7) und auch nicht den Wegsprung der Antriebsachse (8) beim Zu- und Abschalten der Liftachse (11) zu berücksichtigen. Die Kontur (72) kann deshalb darauf beschränkt sein, einen linearen Zusammenhang zwischen dem in Rede stehenden Weg des Punktes (B) und dem Abstand (x) zu definieren.

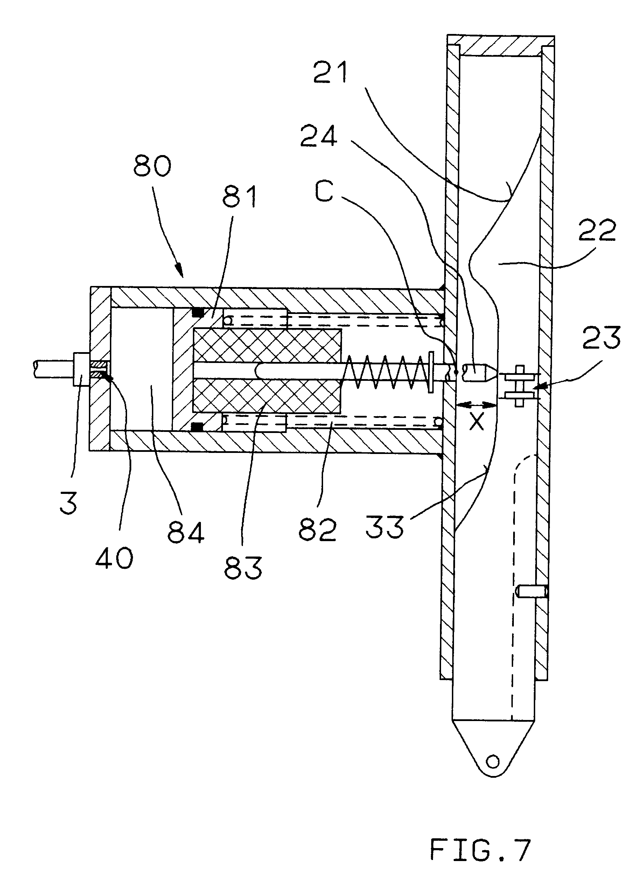

Beim Ausführungsbeispiel nach Fig.7 wird dessen Eignung für die Betriebsart "variable Achslastbeteiligung der Liftachse" durch eine von dem Druck des Liftbalgs (1) abhängige axiale Verschiebung des Stators (83) des hier generell mit (80) bezeichneten elektrischen Wegsensors hergestellt. Der Stator (83) ist Teil eines Kolbens (81, 83), der eine Kammer (84) begrenzt, welcher der Druck des Liftbalgs (1) über die Druckmittelleitung (3) zugeführt wird. Der Kolben (81, 83) ist entgegen dem Druck in der Kammer (84) durch eine Feder (82) vorgespannt. Solange im Liftbalg (1) und damit in der Kammer (84) Umgebungsdruck herrscht, die Liftachse (11) also voll zugeschaltet ist, hält die Feder (82) den Kolben (81, 83) und damit auch den Stator (83) in der Stellung geringsten Volumens der Kammer (84). Aus dieser Stellung werden der Kolben (81, 83) und damit der Stator (83) mit zunehmendem Druck des Liftbalgs (1) in der Kammer (84) in Richtung deren größten Volumens zunehmend verschoben, wobei die Eintauchtiefe des hier wieder mit (24) bezeichneten Stößels in den Stator (83) und damit das elektrische Signal des Wegsensors (80) analog zum Ausführungsbeispiel nach Fig.3 das dem Abstand (x) entsprechende Signal korrigiert bzw. überlagert.

Die Feder (82) ist derart ausgebildet und/oder einstellbar, daß die druckabhängige Verschiebung von Kolben (81, 83) und Stator (83) beim Abschaltdruck in nicht näher dargestellter Weise an einem Gehäuseanschlag oder durch Zublockgehen der Feder (82) ihr Ende findet.

Im übrigen gelten, soweit sich aus den vorstehenden Ausführungen nichts anderes ergibt, die für ein Ausführungsbeispiel gegebenen Erläuterungen für die anderen Ausführungsbeispiele in entsprechender Anwendung mit. Insbesondere können die Ausführungsbeispiele nach den Fig.4 und 6 auch ohne Zylindereinheit analog Fig.2 ausgebildet sein, wenn das Lift-Achsaggregat in der Betriebsart "feste Achslastbeteiligung der Liftachse" eingesetzt wird. Es liegt auf der Hand, daß auch mehrere Einrichtungen zur Gewinnung eines Achslastsignals und/oder zur Auswertung des Achslastsignals, beispielsweise parallel oder in Verschieberichtung des Signalkörpers versetzt, mit gemeinsamem Gehäuse oder getrennten Gehäusen vorgesehen sein können.

Der Fachmann erkennt auch, daß die in den Ausführungsbeispielen in bzw. an dem Gehäuse (25) angeordneten erfindungswesentlichen Elemente auch ohne gemeinsames Gehäuse angeordnet werden können, sofern sie nur den erfindungswesentlichen Bedingungen, beispielsweise Bestandteile des Fahrzeugoberbaus bzw. der Antriebsachse bzw. des Lift-Achsaggregats zu sein, genügen.

Schließlich erkennt der Fachmann, daß sich der Schutzbereich der Erfindung nicht in den Ausführungsbeispielen erschöpft, sondern alle Ausgestaltungen umfaßt, deren Merkmale sich den Patentansprüchen unterordnen.

## Patentansprüche

1. Einrichtung zur Gewinnung eines Achslastsignals der mechanisch gefederten Antriebsachse (8) eines aus der Antriebsachse (8) und einer durch Druckbeaufschlagung wenigstens eines Druckmittelelements mit wenigstens einem Abschaltdruck abschschaltbaren Liftachse (11) bestehenden Lift-Achsaggregats, mit einem Signalkörper (22), dadurch gekennzeichnet,
daß der Signalkörper (22) abhängig vom Weg eines Punktes (B) der Antriebsachse (8) gegenüber einem Punkt (C) des Fahrzeugoberbaus (2; 25) verschiebbar ist und daß er wenigstens eine Kontur (21, 33; 72) trägt, die für jede Verschiebestellung einen das Achslastsignal wenigstens mitbestimmenden vorbestimmten Abstand (x) von dem Punkt (C) im wesentlichen quer zur Verschiebeachse (Doppelpfeil V) des Signalkörpers (22) aufweist.

2. Einrichtung nach Anspruch 1, dadurch gekennzeichnet, daß am Fahrzeugoberbau (2; 25) ein den Abstand (x) der Kontur (21, 33; 72) des Signalkörpers (22) von dem Punkt (C) am Fahrzeugoberbau (2; 25) erfassender Stößel (24; 44, 42, 47; 44, 42, 50; 44, 42, 60; 44, 42, 73) axial verschiebbar geführt ist.

3. Einrichtung nach Anspruch 2, dadurch gekennzeichnet, daß in dem Stößel (44, 42, 47; 44, 42 50; 44, 42, 60; 44, 42, 73) eine mit dem Druck des Druckmittelements beaufschlagbare Zylindereinheit (42) angeordnet ist.

4. Einrichtung nach einem der Ansprüche 2 oder 3, dadurch gekennzeichnet, daß der Stößel (24; 44, 42, 47; 44, 42, 60) als Fühler eines elektrischen Wegsensors (20; 80) ausgebildet ist.

5. Einrichtung nach einem der Ansprüche 2 bis 4, dadurch gekennzeichnet, daß der Stößel (44, 42, 73) als Stellglied eines Niveauregelventils (75) ausgebildet ist.

6. Einrichtung nach Anspruch 2, dadurch gekennzeichnet, daß der Stößel (24) als Fühler eines elektrischen Wegsensors (80) ausgebildet ist und daß der Stator (83) des Wegsensors (80) abhängig von dem Druck des Druckmittelelements axial verschiebbar ist.

7. Einrichtung nach Anspruch 6, dadurch gekennzeichnet, daß der Stator (83) Teil eines eine mit dem Druck des Druckmittelelements beaufschlagbare Kammer (84) begrenzenden Kolbens (81, 83) ist.

8. Einrichtung nach einem der Ansprüche 3 bis 7, dadurch gekennzeichnet, daß in der Zuleitung des Drucks zu der Zylindereinheit (42) bzw. zu der Kammer (84) eine Drossel (40) angeordnet ist.

## Claims

1. A device for obtaining an axle load signal from the mechanically sprung driven axle (8) of a lifting axle assembly consisting of the driven axle (8) and a lifting axle (11) which is arranged to be disengaged by pressurization of at least one pressure medium element with at least one disengagement pressure, with a signalling body (22), characterized in that the signalling body (22) is displaceable depending on the displacement of a point (B) on the driven axle (8) relative to a point (C) of the vehicle bodywork (2; 25) and it carries at least one contour (21, 33; 72) which for each displacement position has a predetermined distance (x), at least co-determining the axle load signal, from the point (C) substantially transversely to the displacement axis (double-ended arrow V) of the signalling body (22).

2. A device according to claim 1, characterized in that a plunger (24; 44, 42, 47; 44, 42, 50; 44, 42, 60; 44, 42, 73) detecting the contour (21, 33; 72) of the signalling body (22) from the point (C) on the vehicle bodywork (2; 25) is guided in an axially displaceable manner on the vehicle bodywork (2; 25).

3. A device according to claim 2, characterized in that in the plunger (44, 42, 47; 44, 42, 50; 44, 42, 60; 44, 42, 73) there is arranged a cylinder unit (42) pressurizable with the pressure of the pressure medium element.

4. A device according to one of claims 2 or 3, characterized in that the plunger (24; 44, 42, 47; 44, 42, 60) is in the form of a feeler of an electrical displacement sensor (20; 80).

5. A device according to one of claims 2 to 4, characterised in that the plunger (44, 42, 73) is in the form of a setting member of a level-regulating valve (75).

6. A device according to claim 2, characterized in that the plunger (24) is in the form of a feeler of an electrical displacement sensor (80) and the stator (83) of the displacement sensor (80) is axially displaceable in dependence on the pressure of the pressure medium element.

7. A device according to claim 6, characterized in that the stator (83) is part of a piston (81, 83) bounding a chamber (84) pressurizable with the pressure of the pressure medium element.

8. A device according to one of claims 3 to 7, characterized in that a throttle (40) is arranged in the pressure admission line to the cylinder unit (42) and the chamber (84) respectively.

## Revendications

1. Dispositif d'obtention d'un signal de charge d'un essieu moteur à suspension mécanique appartenant à un train de roulement doté d'un essieu relevable et constitué par ledit essieu moteur (8) et par un essieu relevable (11) inactivable par application d'au moins une pression d'inactivation à au moins un élément à fluide de pression, avec un organe de signalisation (22),
caractérisé
par le fait que l'organe de signalisation (22) peut être déplacé en fonction du déplacement du point (B) de l'essieu moteur (8) par rapport à un point (C) de la superstructure (2, 25) du véhicule et par le fait qu'il porte au moins un contour (21, 33, 72) qui présente, pour chaque position de déplacement, une distance au point (C) prédéterminée (X), dirigée sensiblement suivant une direction transversale à l'axe de déplacement (double flèche V) de l'organe de signalisation (22), ladite distance (X) fournissant au moins une contribution à la détermination du signal de charge d'essieu.

2. Dispositif selon la revendication 1, caractérisé par le fait qu'un taquet-palpeur (24; 44, 42, 47; 44, 42, 50; 44, 42, 60; 44, 42, 73) lisant la distance(X) entre le contour (21, 33; 72) de l'organe de signalisation (22) et le point (C) est guidé à coulissement axial sur la superstructure du véhicule (2; 25).

3. Dispositif selon revendication 2, caractérisé par le fait qu'une unité-vérin à cylindre (42) pouvant être sollicitée par la pression de l'élément à fluide de pression est agencée dans le taquet-palpeur (44, 42, 47; 44, 42, 50; 44, 42, 60; 44, 42, 73).

4. Dispositif selon l'une des revendications 2 ou 3, caractérisé par le fait que le taquet-palpeur (24; 44, 42, 47; 44, 42, 60) est réalisé en tant que palpeur d'un capteur électrique de distance ou déplacement (20; 80).

5. Dispositif selon l'une des revendications 2 à 4, caractérisé par le fait que le taquet-palpeur (44, 42, 73) est réalisé en tant qu'organe positionneur d'une vanne de réglage de niveau (75).

6. Dispositif selon revendication 2, caractérisé par le fait que le taquet-palpeur (24) est réalisé en tant que palpeur d'un capteur électrique de distance ou déplacement (80), et par le fait que le stator (83) de ce capteur (80) est déplaçable axialement en fonction de la pression de l'élément à fluide de pression.

7. Dispositif selon revendication 6, caractérisé par le fait que le stator (83) fait partie d'un piston (81, 83) délimitant une chambre (84) pouvant être exposée à la pression de l'élément à fluide de pression.

8. Dispositif selon l'une des revendications 3 à 7, caractérisé par le fait qu'un organe d'étranglement (40) est agencé dans la conduite d'amenée de pression allant à l'unité-vérin à cylindre (42) ou encore à la chambre (84).
